(19) **Europäisches Patentamt**
**European Patent Office**
**Office européen des brevets**

(11) **EP 2 057 583 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(21) Anmeldenummer: **07846271.0**

(22) Anmeldetag: **29.10.2007**

(51) Int Cl.:
***G06K 9/00*** *(2006.01)* ***B60Q 1/14*** *(2006.01)*

(86) Internationale Anmeldenummer:
**PCT/DE2007/001935**

(87) Internationale Veröffentlichungsnummer:
**WO 2008/064625 (05.06.2008 Gazette 2008/23)**

(54) **VERFAHREN ZUR AUTOMATISCHEN FERNLICHTSTEUERUNG**

AUTOMATIC HIGH BEAM CONTROL METHOD

PROCÉDÉ DE COMMANDE AUTOMATIQUE DES FEUX DE ROUTE

(84) Benannte Vertragsstaaten:
**DE FR**

(30) Priorität: **27.11.2006 DE 102006055908**

(43) Veröffentlichungstag der Anmeldung:
**13.05.2009 Patentblatt 2009/20**

(73) Patentinhaber: **ADC Automotive Distance Control Systems GmbH**
**88131 Lindau (DE)**

(72) Erfinder:
• **HEINRICH, Stefan**
**77855 Achern (DE)**
• **FECHNER, Thomas**
**88079 Kressbronn (DE)**

• **ALMEIDA, Carlos**
**88131 Lindau (DE)**
• **KRÖKEL, Dieter**
**88097 Eriskirch (DE)**

(74) Vertreter: **Bobbert, Christiana**
**Conti Temic microelectronic GmbH**
**Patente & Lizenzen**
**Sieboldstrasse 19**
**90411 Nürnberg (DE)**

(56) Entgegenhaltungen:
**WO-A-2004/034183 DE-A1- 3 740 789**
**DE-U1- 29 825 026 US-A1- 2004 143 380**
**US-A1- 2004 164 851**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 057 583 B1

**Beschreibung**

Die Erfindung betrifft ein Verfahren zur automatischen Fernlichtsteuerung von Kraftfahrzeugscheinwerfern basierend auf einem Kamerasensor, mit dem die Fahrzeugumgebung überwacht wird.

Eine automatische Lichtsteuerung basierend auf einem Fotosensor ist in der Offenlegungsschrift DE 19820348 beschrieben. Dazu wird im Kraftfahrzeug ein hochsensibler Fotosensor vorgesehen, der in Fahrtrichtung nach vom ausgerichtet ist. Die Scheinwerfer eines entgegenkommenden Fahrzeugs treffen auf den Fotosensor, wenn sich ein Kraftfahrzeug nähert und das Fernlicht wird ausgeschaltet. Wird wieder eine hinreichend kleine Lichtintensität vom Fotosensor detektiert, wenn das entgegenkommende Fahrzeug das eigene Fahrzeug passiert hat und sich außerhalb des Erfassungsbereichs des Fotosensors befindet, wird das Fernlicht wieder eingeschaltet.

Bei dieser sehr einfachen Methode wird nur die Lichtintensität gemessen, nicht aber die Art der "Lichtquelle" Umgebungslicht, Reflektor, Fahrzeugscheinwerfer, Straßenbeleuchtung etc. klassifiziert wird. Dies kann zu einer Fehlfunktion der Beleuchtungssteuerung führen.

Aus der WO 2004/034 183 ist ein Verfahren gemäß dem Oberbegriff des Anspruchs 1 bekannt.

Aufgabe der Erfindung ist es daher, ein verbessertes Verfahren zur Fernlichtsteuerung eines Fahrzeugs anzugeben.

Diese Aufgabe ist erfindungsgemäß gelöst durch die im kennzeichnenden Teil des Anspruchs 1 aufgeführten Schritte. Vorteilhafte Weiterbildungen sind den Unteransprüchen zu entnehmen.

Es wird ein Verfahren zur automatischen Lichtsteuerung für ein Fahrzeug mit einem Kamerasensor zur Überwachung der Umgebung vor dem Kraftfahrzeug angegeben. Dazu wird eine Bilderfolge aufgenommen und es wird die Fahrspur des eigenen Fahrzeugs aus den Bilddaten bestimmt. Eine solche Fahrspurschätzung ist z.B. auch Bestandteil eine Lane-Departure-Warning bzw. eines Lane-Departure-Protection Systems. Es wird zumindest ein Auswertefenster entlang der Fahrspur im Bild gesetzt, so dass vorausfahrende und entgegenkommende Fahrzeuge erfasst werden. Innerhalb eines Auswertefensters werden Lichtpunkte in der Bilderfolge verfolgt. Anhand der Eigenschaften der Lichtpunkte (z.B. spektrale Zusammensetzung, zeitlicher Verlauf der Intensität, Bewegungsverlauf im Bild, absolute Intensität etc.) werden die Lichter anderer Fahrzeuge erkannt. Die Frontscheinwerfer werden so gesteuert, dass Fahrer anderer Fahrzeuge nicht geblendet werden

In einer besonderen Ausgestaltung des Verfahrens wird nachdem die Lichter eines Fahrzeugs den Erfassungsbereich verlassen haben und vor dem Umschalten der Fahrzeugscheinwerfer auf Fernlicht eine Rückkehrwahrscheinlichkeit der Fahrzeuglichter berechnet. Bei einer Rückkehrwahrscheinlichkeit oberhalb eines vorgegebenen Schwellwerts wird nicht auf Fernlicht umgestellt.

In einer besonderen Ausgestaltung der Erfindung wird rechenzeitoptimierten Verfahren für die Verfolgung (Tracking) von Lichtpunkten in einer Bilderfolge angewendet. Dazu ist für zumindest einen Lichtpunkt ein Fangfenster vorgegeben, in dem sich der Lichtpunkt mit hoher Wahrscheinlichkeit in den zeitlich später aufgenommenen Bildern befindet.

Eine vorteilhafte Ausgestaltung der Erfindung benutzt zur Erkennung von Fahrzeugen die Eigenschaft aus, dass Fahrzeuglichter i .d. R. paarweise auftreten.

Die Erfindung wird nachfolgend anhand von Ausführungsbeispielen und Abbildungen näher erläutert.

Fig. 1: Herkömmliches Fangfenster (links) und optimiertes Fangfenster für entgegenkommende oder vorausfahrende Fahrzeuge (rechts)

Fig. 2: Zusammenwachsen von Fahrzeuglichtern

Fig. 3: Intensitätsschwankung S aufgetragen über der Intensität I für entgegenkommende Frontschweinwerfer (oben) und Reflektoren (unten) in einem vorgegebenen Intensitätsbereich.

Fig. 4: Schematische Häufigkeitsverteilung der Intensität von Reflektoren und Fahrzeuglichtern

Fig. 5: Nickbewegung

Alle hier beschriebenen Merkmale können einzeln oder in einer beliebigen Kombination zur Erfindung beitragen. Ein zeitlicher Ablauf der Verfahrensschritte ist durch die hier gewählte Reihenfolge nicht zwingend vorgegeben.

Auswahl eines geeigneten Bildausschnitts

In einem Ausführungsbeispiel der Erfindung werden Bildausschnitte (Fenster) bestimmt, in denen nach Fahrzeugen gesucht wird. Durch die Fensterverarbeitung wird der Bildverarbeitungs-Aufwand deutlich reduziert, da nicht mehr das gesamte Bild nach Fahrzeugen durchsucht werden muss. Zudem kann bei Kenntnis der Fahrspur das Fenster so auf die zu erwartete Fahrspur positioniert werden, so dass Fehldetektionen von Objekten am Straßenrand vermindert werden. Die Größe des Fensters wird so gewählt, dass die gesuchten Fahrzeugobjekte hineinpassen. Es wird ein Randbereich hinzugefügt, der umso größer ist, je ungenauer die Kenntnis über die zu erwartende Fahrzeugposition ist. Die vertikale Position, Breite und die Höhe des Suchfensters wird nach einer Entfernungshypothese aus dem Wissen der Kamera-Abbildungsgleichung positioniert (siehe Abschnitt_Analyse der Bewegung von Lichtpunkten im Bild). Die horizontale Positionierung des Fensters erfolgt aufgrund des Wissens über den Verlauf der Fahrspur vor dem Fahrzeug aus einer vorangegangenen Fahrspurbestimmung mittels Bildverarbeitung. Diese Daten werden z. B. von einem im Fahrzeug integrierten Lane Departure Waming System, Fahrerassistenzsystem (ACC), einer digitaler Karte und satellitengestützter Positionsbestimmung (z.B. aus Navigations-System) oder aus einer Kursschätzung, die mittels Inertialsensorik gewonnen wird, zur Verfügung gestellt. Eine Fahrspurerkennung mit einer Kamera basiert z.B. auf der Erkennung von Fahrspurmarkierungen, der Unterscheidung zwischen Fahrbahn und Randbebauung etc.

Rückkehrwahrscheinlichkeit von Fahrzeuglichtern

Es wird eine Wahrscheinlichkeit für die Rückkehr von Fahrzeuglichtern geschätzt, die das Auswertefenster verlassen haben. Liegt die Rückkehrwahrscheinlichkeit oberhalb eines vorgegebenen Schwellwerts wird nicht auf Fernlicht umgestellt.
Die Bestimmung der Rückkehrwahrscheinlichkeit kann z. B. auf einem der folgenden Szenarien basieren:

o Wenn ein entgegenkommendes bzw. vorausfahrendes Fahrzeug das Auswertefenster seitlich oder in vertikaler Richtung verlässt, wird in Abhängigkeit von der Fahrzeugeigenbewegung (Nick-, Gier-, Rollwinkel) eine Rückkehrwahrscheinlichkeit des anderen Fahrzeugs berechnet. Es wird z. B. bei einer Kurvenfahrt die Gierrate des eigenen Fahrzeugs genutzt, um die Wahrscheinlichkeit des Wiedereintritts eines Fremdfahrzeuges zu ermitteln, das das Auswertefenster seitlich, in Richtung der Gierrate verlässt. Bei einer Drehung des Eigenfahrzeugs (aufgrund einer Kurvenfahrt) in "Verlassensrichtung" des Fremdfahrzeugs ist die Wahrscheinlichkeit hoch, dass das Fahrzeug kurze Zeit später wieder im Auswertefenster zu sehen ist.
o Auf eine Autobahn oder Bundesstraße befinden sich Büsche, Pfähle, Lärmschutzbegrenzungen oder ähnliche nicht kontinuierliche Sichthindernisse zwischen den Fahrspuren mit entgegen gesetzter Fahrtrichtung. Die Lichter von entgegenkommenden Fahrzeugen sind in einmal sichtbar, dann wieder unsichtbar. Werden z. B. mit dem Kamerasensor die Sichthindernisse erfasst und mit einem nachfolgenden Auswertealgorithmus erkannt und sind die Lichtpunkte eines entgegenkommenden Objekts (Fahrzeugs) erloschen, obwohl die Bewegungstrajektorie des Objekts noch nicht am Rand des Auswertefensters angekommen ist, ist die Wahrscheinlichkeit hoch, dass das entgegenkommende Fahrzeug kurze Zeit später wieder im Auswertefenster zu sehen ist.

Fangfenster beim Verfolgen von Lichtpunkten

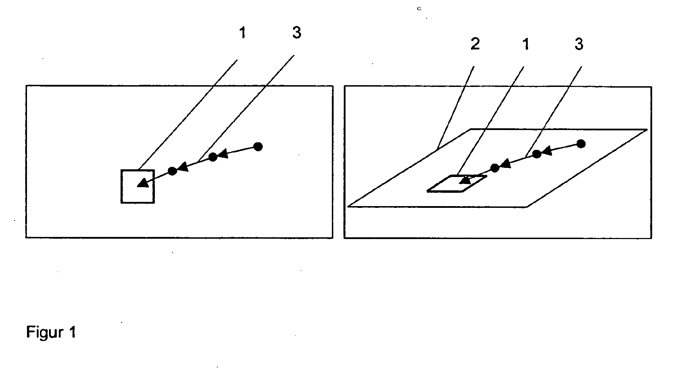

Zur zeitlichen Verfolgung von Lichtpunkten in einer Bildfolge wird üblicherweise ein Tracking-Filter verwendet. Dabei wird aus der zeitlichen Bewegungshistorie eine Vorhersage über die Position im aktuellen Bild gemacht. Bei der Berechnung der Fangbereiche 1 wird hier üblicherweise eine Gleichverteilung in x-/y-Richtung im Bildkoordinatensystem angenommen. Ein solcher Fall ist in Figur 1 links abgebildet. Dort ist eine Objektrajektorie 3 mit üblichem Fangbereich 1 dargestellt. Der Fangbereich 1 wird so gewählt, dass sich der Lichtpunkt dort mit hoher Wahrscheinlichkeit in den zeitlich später aufgenommenen Bildern befindet. Das Fangfenster 1 wird genau einem Lichtpunkt bzw. einem Lichtpunktpaar zugeordnet und ist nicht zu verwechseln mit dem Auswertefenster, das den gesamten Bildbereich definiert, in dem nach Lichtpunkten gesucht wird. In einer vorteilhaften Ausgestaltung der Erfindung sind die Auswertefenster so gesetzt, dass nur Objekte auf der Fahrbahn erfasst werden. Das Fangfenster 1 ist i. d. R. ein Teilbereich des Auswertefensters, es kann aber Ausnahmen geben. Aufgrund der Bewegungshistorie kann auch die zukünftige Bewegungsrichtung von anderen Fahrzeugen (entgegenkommend oder vorausfahrend) mit hoher Wahrscheinlichkeit bestimmt werden. Unter der Voraussetzung, dass die Fahrbahn im Erfassungsbereich des Kamerasystems plan ist und keine Hügel aufweist, verläuft die Bewegung von anderen Fahrzeugen in Ebenen mit konstanter Höhe. Eine Ebene mit einer vorgegebenen konstanter Höhe vor dem Kraftfahrzeug mit Kamerasensor wird im Kamerabild in einen Bildbereich 2 abgebildet, der durch die Blickrichtung und Abbildungseigenschaften der Kamera vorgegeben ist. Ein solcher Fall ist in Figur 1 rechts dargestellt. Dort ist ein Bereich 2 im Kamerabild eingezeichnet, der einer Ebene im Umfeld des Kraftfahrzeugs mit Kamerasystem entspricht. Die Objekttrajektorie 3 eines entgegenkommenden Fahrzeugs ist im Bereich 2 des Kamerabilds emthalten. Der Fangbereich 1 wird so vorgegeben, dass er Bestandteil des Bereichs 2 ist. Zudem ist der Fangbereich 1 in Bewegungsrichtung des Objekts größer ausgelegt als entgegengesetzt zur Bewegungsrichtung. Durch die Berücksichtigung der Objekttrajektorie von Lichtpunkten zu wird das Verfolgen von Lichtpunkten robuster gegenüber Störungen. Zudem wird durch die kleineren Suchbereiche der Berechnungsaufwand verringert.

Doppellichter

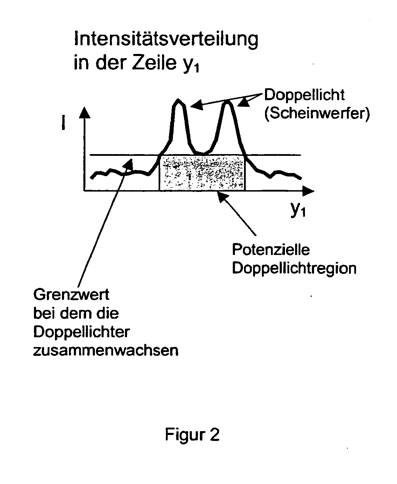

Scheinwerfer bzw. Rückleuchten treten i. d. R. paarweise auf, was zur Erkennung von Fahrzeugobjekten bei Dunkelheit genutzt werden kann. Zur Erkennung eines Doppellichts wird ein Grenzwert bei niedrigen Helligkeitswerten gesetzt. Dies ist bei dem die Doppellichter (sowie die Reflexionen der Scheinwerfer auf der Straße) zu einer großen Lichtregion zusammenwachsen. Dies ist in Figur 2 dargestellt. Aufgetragen ist die Intensität I in einer Pixelzeile y1. Als durchgezogene Linie parallel zur Abszisse ist der Grenzwert der Intensität aufgetragen, bei dem die Doppellichter zusammenwachsen.
Im Folgenden werden beispielhaft Methoden angegeben, wie anhand der Eigenschaften der Lichtpunkte (z.B. spektrale Zusammensetzung, zeitlicher Verlauf der Intensität, Bewegungsverlauf im Bild, absolute Intensität etc.) die Lichter anderer Fahrzeuge erkannt werden können. Die Methoden können entweder einzeln oder in einer beliebigen Kombination verwendet werden.

Analyse der Intensität von Lichtpunkten

I) Analyse der zeitlichen Intensitätsschwankungen von Lichtpunkten

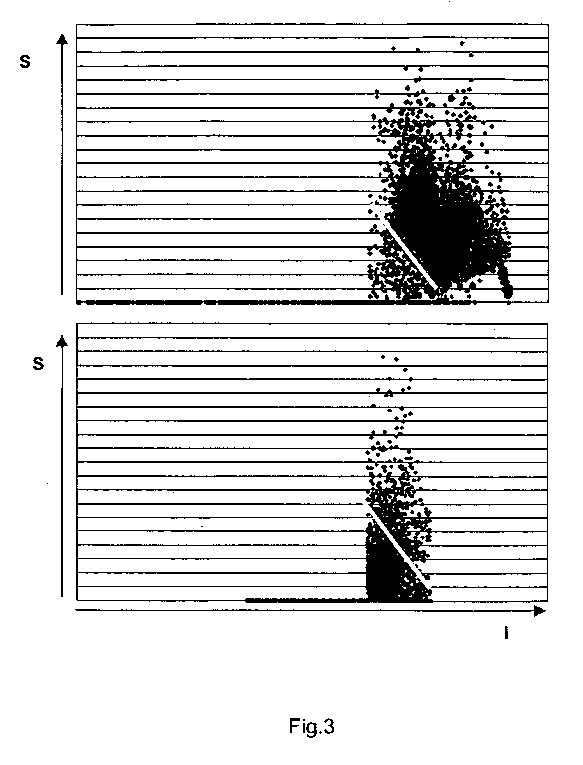

Wird ein Lichtpunkt erkannt, wird er in der Bilderfolge verfolgt (getrackt). Die Intensität eines verfolgten Lichtpunkts wird in einer Vielzahl von Bildern bestimmt und der Intensitätsverlauf wird analysiert. Von besonderem Interesse dabei ist die Schwankung der Intensität um einen Mittelwert. Da die Intensität eines Lichtpunkts von der Entfernung abhängt, die sich bei einem bewegten Fahrzeug mit Kamera i. d. R. kontinuierlich verändert, wird ein gleitender Mittelwert zur Bestimmung der Intensitätsschwankung benutzt. Eine alternative Methode, die Intensitätsschwankung darzustellen, besteht darin, den Betrag des Hubs von aufeinander folgenden Messwerten zu bestimmen. In Fig. 3 oben ist für entgegenkommende Lichtquellen und in 1 unten für Reflektoren in einem vorgegebenen Intensitätsbereich die Intensitätsschwankung aufgetragen. Es ist sofort erkennbar, dass die ermittelte Intensitätsschwankung in dem vorgegebenen Intensitätsbereich für den Scheinwerfer eines entgegenkommenden Fahrzeugs im Durchschnitt deutlich größer ist als die Intensitätsschwankung für einen Reflektor. In beiden Abbildungen Figur 3 oben und 3 unten ist zur Verdeutlichung die gleiche weiße Linie eingezeichnet. In Figur 3 oben (entgegenkommende Fahrzeugscheinwerfer) befindet sich eine deutliche Überzahl der Intensitätsschwankungsgeschichte oberhalb der Linie, wohingegen in Figur 3 unten (Reflektoren zur Fahrbahnbegrenzung) die deutliche Überzahl der Varianzwerte unterhalb der Linie angeordnet ist. Die Ursache für das unterschiedliche Verhalten der Varianz ist die spezifische Rückstrahlcharakteristik von Reflektoren, die das Licht in die Richtung zurückreflektieren aus der es gekommen ist. Da Scheinwerfer und Kamerasensor in einem Kraftfahrzeug derselben Eigenbewegung des eigenen Kraftfahrzeugs unterworfen sind, ist der Einfallwinkel des reflektierten Lichts auf den Kamerachip und damit die Intensität des Lichtpunkts vergleichsweise konstant. Handelt es sich um eine Lichtquelle, so weist zumindest das eigene Fahrzeug, das Träger der Kamera ist, eine Eigenbewegung z. B. Nickbewegung auf. Der Einfallwinkel des Lichts auf den Kamerachip und damit die Intensität des Lichtpunkts im Bild ist vergleichsweise wenig konstant. Diese Eigenschaft wird zur Unterscheidung eines Reflektors von einer selbststrahlenden Lichtquelle genutzt. Es werden Lichtpunkte deren Intensitätsschwankungswerte hauptsächlich unterhalb der Grenzlinie angeordnet sind als Reflektor klassifiziert. Lichtpunkte deren Intensitätsschwankungswerte hauptsächlich oberhalb der Linie liegen werden als selbststrahlende Lichtpunkte erkannt. Der Verlauf einer solchen Grenzlinie kann fest in einem Programm zur Datenverarbeitung vorgegeben sein. Eine Alternative besteht darin, den Verlauf der Grenzlinie an vorher aufgenommene Messwerte anzupassen. Dazu werden die Varianzwerte der Lichtpunkte und ihre Klassifikation (Reflektor, selbststrahlende Lichtquelle) rückschauend betrachtet. Die Klassifikation kann mit Hilfe des Varianzkriteriums und/oder anderen Methoden erfolgen. Die Grenzlinie wird so berechnet, dass möglichst wenige Varianzwerte von Reflektoren oberhalb und möglichst wenige Varianzwerte von selbststrahlenden Lichtquellen unterhalb der Linie liegen.

II) Analyse der absoluten Intensität von Lichtpunkten

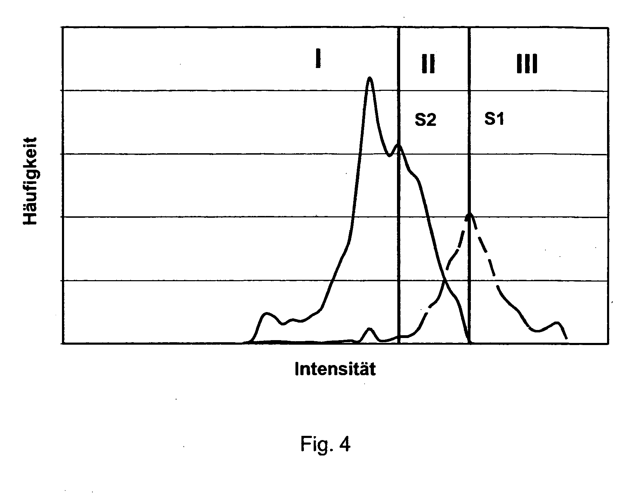

Die Intensität des von Reflektoren zurückgestrahlten Lichts der eigenen Scheinwerfer ist proportional zu $1/x^4$. Wobei x den Abstand zwischen Reflektor und Kraftfahrzeug angibt. Wohingegen die Intensität von selbststrahlenden Lichtquellen, i. d. R. Fahrzeugscheinwerfer, proportional zu $1/x^2$ ist. D. h. bei gleicher Entfernung werden Fahrzeugscheinwerfer eines entgegenkommenden Fahrzeugs heller im Bild abgebildet als Reflektoren, die das Scheinwerferlicht des eigenen Fahrzeugs reflektieren. Eine typische Häufigkeitsverteilung über der Intensität ist in Fig. 4 abgebildet. Die Häufigkeitsverteilung von selbststrahlenden Lichtquellen ist mit einer gestrichelten und die von Reflektoren mit einer durchgezogenen Linie dargestellt. Es ist deutlich erkennbar, dass die Häufigkeitsverteilungen zueinander versetzt sind. Es lassen sich in der Abbildung drei Intensitätsbereiche identifizieren. In dem mit I gekennzeichnete niedrigen Intensitätsbereich werden nur Reflektoren, in dem mit II gekennzeichneten mittleren Intensitätsbereich werden Reflektoren und selbststrahlende Lichtquellen und in dem mit III gekennzeichneten hohen Intensitätsbereich werden nur selbststrahlende Lichtquellen abgebildet. Demnach werden Lichtpunkte mit einer Intensität oberhalb eines oberen Schwellwerts S1 von einem Scheinwerfer verursacht. Lichtpunkte mit einer Intensität unterhalb eines unteren Schwellwerts S2 werden mit einer hohen Wahrscheinlichkeit von einem Reflektor verursacht. Weist ein Lichtpunkt eine Intensität auf, die zwischen den beiden Schwellwerten S 1 und S2 liegt, kann mit dieser Methode keine Aussage getroffen werden, ob es sich um einen Reflektor oder eine selbststrahlende Lichtquelle handelt.

III) Analyse des Intensitätsgradienten

Zudem wird der Intensitätsverlauf des zumindest einen Lichtpunkts aufgenommen. Die Intensität des von Reflektoren zurückgestrahlten Licht der eigenen Scheinwerfer ist proportional zu $1/x^4$. Wobei x den Abstand zwischen Reflektor und Kraftfahrzeug angibt. D. h. anhand des zeitlichen Intensitätsverlaufs kann ein Lichtpunkt als passive Lichtquelle (Reflektor) oder aktive, selbststrahlende Lichtquelle klassifiziert werden. Diese Zuordnung wird in einer bevorzugten Ausgestaltung der Erfindung anhand der bestimmten Entfernung des Lichtpunkts und der Kenntnis über die Leuchtkraft der eigenen Scheinwerfer und den Reflektionseigenschaften von üblichen Reflektoren am Straßenrand verifiziert. In einer Ausgestaltung der Erfindung wird die Entfernungsbestimmung genutzt, um einen voraussichtlichen Intensitätsverlauf für eine passive und eine aktive Lichtquelle zu ermitteln und zur Verifikation genutzt werden, ob es sich um einen Reflektor oder eine aktive Lichtquelle handelt. Ebenso wird in einer bevorzugten Ausgestaltung der Erfindung wird die Intensität des gemessenen Lichtpunkts mit der erwarteten Intensität eines Frontscheinwerfers bzw. eines Rücklichts der üblichen Leuchtstärke in der bestimmten Entfernung verglichen. Die gleiche Vorhersage wird für übliche Reflektoren in der bestimmten Entfernung unter der Annahme der Bestrahlung durch die eigenen Frontscheinwerfer gemacht. Die berechneten Werte werden zur Verifikation genutzt, ob es sich um einen Reflektor oder eine aktive Lichtquelle (Fahrzeuglichter) handelt.

Es wird in dem hier angegebenen Verfahren ein Lichtpunkt als Reflektor identifiziert, wenn der zeitliche Verlauf der Bewegung des Lichtpunkts im Wesentlichen dem Verhalten eines relativ zur Fahrbahn stehenden Objekts genügt und der zeitliche Verlauf der Intensität dem erwarteten Verlauf für eine passive Lichtquelle im Wesentlichen entspricht. Zudem wird ein Lichtpunkt als Fahrzeuglicht identifiziert, wenn der zeitlich örtliche Verlauf der Bewegung des Lichtpunkts im Wesentlichen dem Verhalten eines relativ zur Fahrbahn bewegten Objekts genügt und der zeitliche Verlauf der Intensität dem erwarteten Verlauf für eine aktive Lichtquelle im Wesentlichen entspricht.

Analyse der Bewegung von Lichtpunkten im Bild

I) Bildfluß

Zur Erkennung von Fahrzeuglichtern wird der optische Fluss von hellen punktfömigen Bildobjekten bestimmt, die mittels bekannter Methoden der Bildverarbeitung (Korrelation, morphologischer Filterung, Regionen-Segmentierung) extrahiert werden. Steht der Bildfluss dieser Bildobjekte in Einklang mit der Eigenbewegung (Geschwindigkeit, Gierbewegung) kann von stehenden Lichtpunkten ausgegangen werden. Dazu wird der hypothetische Bildfluss für unbewegte Bildpunkte in verschiedenen Entfernungen bestimmt und mit dem tatsächlichen Bildfluss der aus dem aktuellen Bild extrahierten Lichtpunkte verglichen. Ist der Bildfluss dieser Lichtpunkte im Wesentlichen durch die bekannte Eigenbewegung (Geschwindigkeit, Gierbewegung) geprägt handelt es sich um stehende Lichtpunkte. Trifft keine der Hypothesen für den gemessenen Bildfluss eines Lichtpunktes zu, dann muss es sich um ein bewegtes Licht handeln. Bei der Unterscheidung ist die ungefähre Kenntnis der Entfernung der abgebildeten Lichtpunkte zum Fahrzeug nützlich, da der Bildfluss neben der Eigenbewegung des Kamera-Fahrzeugs und der möglichen Bewegung der Lichtpunkte auch von der Entfernung der Lichtpunkte abhängt. Nahe stehende Objekte weisen einen stärkeren Bildfluss auf als entfernte stehende Objekte.

Eine Methode zur Abstandsbestimmung eines Punktes bzw. Objekts $d$ mit einer Monokularkamera dargestellt. Der Abstand zur Monokularkamera wird aus $h$ der Kameraeinbauhöhe, $\alpha$ dem Kameranickwinkel, $y$ der Bildzeile des Punktes, $\eta$ der Pixelgröße und $f$ die Kamerabrennweite zu

$$d = h \cdot \frac{1 - t \cdot \tan \alpha}{t + \tan \alpha} \quad \text{mit } t = y \cdot \frac{\eta}{f}$$

bestimmt. Sind also die vorgenannten Parameter durch eine Justage der Blickrichtung der Kamera bekannt, kann die Entfernung d bestimmt werden.

II) Störung verursacht durch die Nickbewegung des eigenen Fahrzeugs

Ein häufig auftauchendes Problem bei der Auswertung der Bewegungsrichtung einer Lichtquelle ist das Schaukeln der Karosserie des eigenen Fahrzeugs und damit der Kamera. Das führt dazu, dass der Bildfluss von Objekten nicht nur von der Geschwindigkeit und Gierbewegung des Kamera-Fahrzeugs beeinflusst wird, sondern auch von der rotatorischen Bewegung der Karosserie relativ zur Fahrbahnebene, der Nickbewegung des Fahrzeugs. Im Gegensatz zu Geschwindigkeit und Gierbewegung lässt sich die Nickbewegung nicht ohne weiteres durch Sensoren messen. Diese Störung tritt verstärkt bei Fahrbahnunebenheiten sowie bei Längsbeschleunigung (in positiver wie negativer Richtung) auf. Unabhängig davon, wie gut das Fahrwerk des Kamera-Fahrzeugs die dabei auftretenden Kräfte dämpfen kann, sind Störungen durch Nickbewegung immer vorhanden.

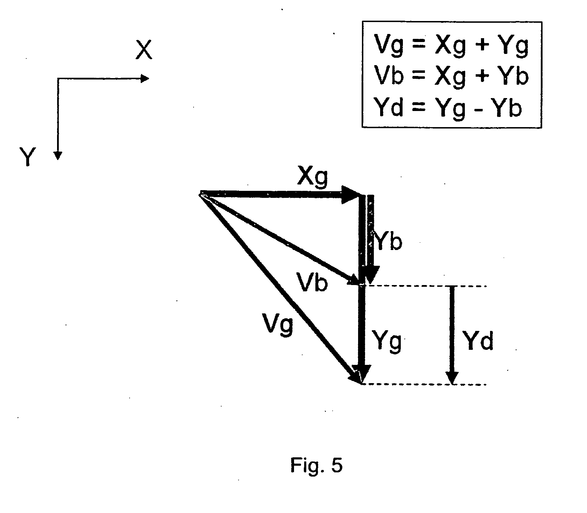

Im Folgenden wird eine Möglichkeit angegeben, die Nickbewegung zu ermitteln, um eine anschließende Kompensation zu ermöglichen. Dazu werden die Kamerabilder selbst analysiert. Taucht das Fahrwerk vom ein, neigt sich die Kamera nach unten und alle Punkte im Videobild verschieben sich entsprechend nach oben, umgekehrt bewegen sich die Punkte nach unten, wenn die Karosserie wieder zurück federt. Man kann nun ausnutzen, dass diese Bewegung im Videobild für alle Punke gleich ist und nur in vertikaler Richtung auftritt, d.h. die horizontale Bewegungskomponente der Bildpunkte bleibt von der Nickbewegung der Kamera unbeeinflusst. Unter der Annahme, dass es sich bei einem betrachteten Bildpunkt um ein stehendes Objekt handelt, kann man aus seiner Position im Bild, bekannter Geschwindigkeit und Gierbewegung des Kamera-Fahrzeugs sowie allein aus seiner horizontalen Verschiebung die Entfernung dieses Punktes zur Kamera berechnen. Ob es sich um ein stehendes oder bewegtes Objekt handelt kann z.B. anhand der Analyse der Intensität in einer Bilderfolge ermittelt werden. Kennt man die Entfernung des Punktes aus der horizontalen Verschiebung, kann man damit wiederum die zugehörige vertikale Verschiebung ermitteln. Da die horizontale Verschiebung des Punktes, wie oben erläutert, unabhängig von der Nickbewegung ist, trifft dies nun auch auf die ermittelte zugehörige vertikale Verschiebung zu. Falls die im Videobild gemessene Verschiebung jetzt durch Nickbewegung der Kamera gestört ist, erkennt man das durch eine Differenz zwischen der gemessenen und der berechneten vertikalen Verschiebung. Mit der ermittelten Nickbewegung können nun die entsprechenden Bilddaten korrigiert werden. In Figur 5 ist die Ermittlung des Nickwinkels schematisch als Vektordiagramm dargestellt. Vg repräsentiert die im Bild gemessene Gesamtverschiebung eines Objekts. Dieser Vektor lässt sich in die gemessene Gesamtverschiebung in X-Richtung Xg und in Y-Richtung Yg aufteilen. Yb bezeichnet die berechnete Verschiebung in Y-Richtung, die wie zuvor erläutert für ein stehendes Objekt berechnet wurde. Yd gibt genau die Differenz zwischen berechneter und gemessener Verschiebung in Y-Richtung und damit den Einfluss der Nickbewegung an.

**Patentansprüche**

1. Verfahren zur automatischen Lichtsteuerung für ein Fahrzeug mit einem Kamerasensor zur Überwachung der Umgebung vor dem Fahrzeug, wobei

    - eine Bilderfolge der Fahrzeugumgebung aufgenommen wird
    - Lichtpunkte in der Bilderfolge verfolgt (getrackt) werden, die sich in dem zumindest einen Messfenster befinden
    - aus den Bilddaten die Lichter anderer Fahrzeuge erkannt werden
    - Frontscheinwerfer so gesteuert werden, dass Fahrer anderer Fahrzeuge nicht geblendet werden,

    **dadurch gekennzeichnet, dass**

    - die Fahrspur des eigenen Fahrzeugs aus den Bilddaten abgeschätzt wird
    - zumindest ein Auswertefenster entlang der Fahrspur im Bild gesetzt wird, so dass vorausfahrende und entgegenkommende Fahrzeuge erfasst werden.

2. Verfahren nach Anspruch 1, **dadurch gekennzeichnet, dass** nachdem die Lichter eines Fahrzeugs den Erfassungsbereich verlassen haben, vor dem Umschalten auf Fernlicht eine Rückkehrwahrscheinlichkeit bestimmt wird und bei einer Rückkehrwahrscheinlichkeit oberhalb eines vorgegebenen Schwellwerts nicht auf Fernlicht umgestellt wird.

3. Verfahren nach Anspruch 2, **dadurch gekennzeichnet, dass** die Rückkehrwahrscheinlichkeit eines anderen Fahrzeugs in Abhängigkeit von der Fahrzeugeigenbewegung (Nick-, Gier-, Rollwinkel) bestimmt wird, wenn ein entgegenkommendes bzw. vorausfahrendes Fahrzeug das Auswertefenster seitlich oder in vertikaler Richtung verlässt.

4. Verfahren nach Anspruch 2 oder 3, **dadurch gekennzeichnet dass,** die Rückkehrwahrscheinlichkeit für Lichtpunkte, die innerhalb des Auswertefensters erlöschen, obwohl ihre Bewegungstrajektorie noch nicht am Rand des Auswertefensters angekommen ist, in Abhängigkeit von erfassten nicht-kontinuierlichen Sichthindernissen zwischen Fahrspuren mit entgegengesetzter Fahrtrichtung hoch bewertet wird.

5. Verfahren nach einem der vorherigen Ansprüche, **dadurch gekennzeichnet, dass** zur rechenzeitoptimierten Verfolgung von Lichtpunkten in einer Bilderfolge für zumindest einen Lichtpunkt ein Fangfenster (1) unter Berücksichtigung der Objekttrajektorie (3) der Lichtpunkts vorgegeben ist, in dem sich der Lichtpunkt mit hoher Wahrscheinlichkeit in den zeitlich später aufgenommenen Bildern befindet.

6. Verfahren nach einem der vorherigen Ansprüche **dadurch gekennzeichnet, dass** zur Erkennung von Fahrzeuglichtern die Bilddaten auf paarweise auftretende Lichter (Doppellichter) hin untersucht werden

7. Kraftfahrzeug mit einem Kamerasensor für ein Fahrerassistenzsystem zur Fahrspurerfassung und Mitteln zum Ausführen des Verfahrens zur automatischen Fernlichtsteuerung nach einem der Ansprüche 1 bis 6.

**Claims**

1. Method for the automatic light control of a vehicle using a camera sensor for monitoring the surroundings in front of the vehicle, wherein

    ■ a sequence of images of the surroundings of the vehicle is recorded,
    ■ light spots in the at least one measuring window are tracked in the sequence of images,
    ■ the lights of other vehicles are recognized based on the image data,

■ headlights are controlled in such a manner that drivers of other vehicles are not dazzled,

**characterized in that**

■ the lane of one's own vehicle is estimated based on the image data,
■ at least one evaluation window along the lane is fixed in the image so that vehicles driving ahead and oncoming vehicles are detected.

2. Method according to Claim 1, **characterized in that** after the lights of a vehicle have left the detection range, a return probability is determined prior to switching over to the high beam and the high beam is not switched over to if the return probability is above a preset threshold value.

3. Method according to Claim 2, **characterized in that** the return probability for another vehicle is determined dependently on the proper motion of the vehicle (pitch angle, yaw angle, roll angle) if an oncoming vehicle or a vehicle driving ahead leaves the evaluation window in a lateral or vertical direction.

4. Method according to Claim 2 or 3, **characterized in that** the return probability for light spots that go out within the evaluation window, although their motion trajectory has not reached the edge of the evaluation window yet, is assessed to be high dependently on detected non-continuous obstacles to visibility between lanes in opposite directions of traffic.

5. Method according to any one of the preceding claims, **characterized in that** for the tracking of light spots in a sequence of images in a computing-time-optimized manner, a capture window (1) is preset for at least one light spot considering the object trajectory (3) of the light spot, in which capture window the light spot can be very probably found in the subsequently recorded images.

6. Method according to any one of the preceding claims, **characterized in that** for the detection of vehicle lights, the image data are searched for lights occurring in pairs (double lights.)

7. Motor vehicle with a camera sensor for a driver assistance system for lane detection and with means for carrying out the method for automatic high beam control according to any one of Claims 1 to 6.

**Revendications**

1. Procédé de commande automatique de lumière pour un véhicule avec un capteur à caméra pour la surveillance de l'environnement situé devant le véhicule,

- une séquence d'images de l'environnement du véhicule étant enregistrée
- des points lumineux dans la séquence d'images étant suivis (poursuivis), ceux-ci étant situés dans la fenêtre de mesure au moins au nombre de un
- les lumières d'autres véhicules étant identifiées à partir des données d'image
- les phares avant étant commandés de sorte que des conducteurs d'autres véhicules ne sont pas éblouis,

**caractérisé en ce que**

- la voie de circulation du propre véhicule est estimée à partir des données d'image
- au moins une fenêtre d'analyse le long de la voie de circulation est placée dans l'image de sorte que des véhicules qui précèdent et des véhicules venant en sens inverse sont détectés.

2. Procédé selon la revendication 1, **caractérisé en ce que,** après que les lumières d'un véhicule ont quitté la zone de détection, une probabilité de retour est définie avant la commutation vers les pleins phares et, dans le cas d'une probabilité de retour supérieure à une valeur de seuil prédéfinie, il n'y a pas de changement de position vers les feux de route.

3. Procédé selon la revendication 2, **caractérisé en ce que** la probabilité de retour d'un autre véhicule est définie en fonction du mouvement propre du véhicule (angle de tangage, de lacet, de roulis) quand un véhicule venant en sens inverse ou qui précède quitte la fenêtre d'analyse latéralement ou dans la direction verticale.

4. Procédé selon la revendication 2 ou 3, **caractérisé en ce que** la probabilité de retour pour des points lumineux qui s'éteignent à l'intérieur de la fenêtre d'analyse, bien que leur trajectoire de mouvement ne soit pas encore arrivée au bord de la fenêtre d'analyse, est évaluée à un niveau élevé en fonction d'obstacles visuels discontinus détectés entre des voies de circulation ayant une direction de circulation opposée.

5. Procédé selon une des revendications précédentes, **caractérisé en ce que,** pour une poursuite, optimisée au plan du temps de calcul, de points lumineux dans une séquence d'images, pour au moins un point lumineux, une fenêtre de capture (1) est prédéfinie en prenant en compte la trajectoire d'objet (3) du point lumineux, fenêtre de capture dans laquelle le point lumineux se trouve avec une grande probabilité dans les images enregistrées à un instant ultérieur.

6. Procédé selon une des revendications précédentes, **caractérisé en ce que,** pour identifier des lumières de véhicule, les données d'image sont examinées à la recherche de lumières apparaissant par paires (lumières doubles).

7. Véhicule automobile avec un capteur à caméra pour un système d'aide au conducteur en vue de la détection de voie et des moyens pour la réalisation du procédé de commande automatique des pleins phares selon une des revendications 1 à 6.

Figur 1

Intensitätsverteilung
in der Zeile $y_1$

Doppellicht
(Scheinwerfer)

$y_1$

Potenzielle
Doppellichtregion

Grenzwert
bei dem die
Doppellichter
zusammenwachsen

Figur 2

Fig.3

Fig. 4

X

Y

$$Vg = Xg + Yg$$
$$Vb = Xg + Yb$$
$$Yd = Yg - Yb$$

Xg

Yb

Vb

Vg

Yg

Yd

Fig. 5

**EP 2 057 583 B1**